# EUROPEAN PATENT SPECIFICATION

(11) **EP 4 206 482 B1**
(45) Date of publication and mention of the grant of the patent: **21.05.2025**
(21) Application number: 22871135.4
(22) Date of filing: 24.08.2022
(51) Int. Cl.: G06F 1/16, H04M 1/02, F16C 11/04, F16C 11/10

(54) **ROTARY SHAFT AND TERMINAL DEVICE**
DREHWELLE UND ENDGERÄTEVORRICHTUNG
ARBRE ROTATIF ET DISPOSITIF TERMINAL

(30) Priority: 09.10.2021 CN 202111176779
(43) Date of publication of application: 05.07.2023
(73) Proprietor: Honor Device Co., Ltd., Shenzhen, Guangdong 518040 (CN)
(72) Inventor: YANG, Desen, Shenzhen, Guangdong 518040 (CN); WU, Ling, Shenzhen, Guangdong 518040 (CN); XU, Zibin, Shenzhen, Guangdong 518040 (CN); HUO, Guoliang, Shenzhen, Guangdong 518040 (CN)
(74) Representative: Gill Jennings & Every LLP
(86) International application number: PCT/CN2022/114629
(87) International publication number: WO 2023/056796

(56) References cited:
- WO-A1-2021/136028
- CN-A- 113 044 386
- CN-A- 114 110 007
- CN-U- 201 561 044
- CN-Y- 2 859 059
- FR-A1- 2 969 241
- JP-A- 2000 213 581
- JP-A- H09 291 955
- US-A1- 2009 212 666
- US-A1- 2017 371 379
- US-A1- 2021 234 107

## Description

### CROSS-REFERENCE TO RELATED APPLICATIONS

This application claims priority to Chinese Patent Application No. 202111176779.9, filed with the China National Intellectual Property Administration on October 9, 2021 and entitled "ROTATING SHAFT AND TERMINAL DEVICE".

### TECHNICAL FIELD

This application relates to the field of mechanical structure technologies, and in particular, to a rotating shaft and a terminal device.

### BACKGROUND

With development of society, rotating shafts are more widely used, for example, in laptop computers. An existing rotating shaft is complicated to mount, has a large mounting error, and a short service life. In addition, during use of the terminal device including the foregoing rotating shaft, a torsion force fluctuation will occur, which affects user experience.
US2017/371379A1 describes a pivoting mechanism for an electronic device includes a pivot shaft, a first connecting member disposed on the pivot shaft for being connected with a support of the electronic device, a second connecting member disposed on the pivot shaft for connected with a main body of the electronic device, and a torque adjusting assembly. The torque adjusting assembly includes four sleeves and an elastic member through which the pivot shaft is disposed. Each of the sleeves includes at least one protrusion. The protrusion of one of the four sleeves is slidable relative to the protrusion of another sleeve for adjusting an amount of deformation of the elastic member.
WO2021/136028 describes a hinge device and foldable terminal.
JP2000213581A describes a spring made of plastics.

### SUMMARY

In view of this, it is necessary to provide a rotating shaft and a terminal device that is easy to mount, has a stable torsion force, and a long service life, so as to resolve the foregoing problem.

According to a first aspect, this application provides a rotating shaft as defined in claim 1. The rotating shaft includes a central shaft, a first bracket, a second bracket, an elastic member, and a concave cam assembly. The first bracket is rotatably mounted on the central shaft, and the second bracket is fixedly connected to the central shaft. The elastic member is disposed on the central shaft, the elastic member is a hollow cylinder of an integrated structure, and a hollowed-out hole is disposed on a cylinder wall of the cylinder. The concave cam assembly is disposed on the central shaft, and the concave cam assembly may enable the elastic member to be deformed. When the first bracket rotates relative to the second bracket, the concave cam assembly generates an extrusion force acting on the elastic member, so that the elastic member in a hollowed-out shape is deformed, and then a specific included angle is formed between the first bracket and the second bracket.

In the foregoing design, the elastic member that is of the integrated structure and that is in the hollowed-out shape is used, and may be assembled to the central shaft at one time, and therefore mounting is simple, thereby improving mounting efficiency. The elastic member replaces a disc spring group including a plurality of disc springs, so as to fundamentally avoid problems of low efficiency and high error rate that are caused by assembling the plurality of disc springs, and no additional automatic assembly device needs to be disposed. In addition, the elastic member of the integrated structure may avoid a torsion force fluctuation in a direction perpendicular to an axial direction when a plurality of disc springs or springs are used in a related technology. A structure of the elastic member in this application is more conducive to ensuring stability after the first body and the second body are opened. In addition, the elastic member is always in an elastic deformation area of the elastic member in a process of being deformed by the extrusion force, and no plastic deformation occurs. Therefore, plastic deformation and elastic attenuation of the disc spring in the related technology do not occur, and a use frequency is improved. In addition, based on the structure of the elastic member in this application, when the extrusion force acting on the elastic member exceeds a critical point, the elastic member features a constant force.

A plurality of hollowed-out holes and a plurality of connecting ribs are disposed on a cylinder wall of the elastic member, and the plurality of hollowed-out holes are interleaved with the plurality of connecting ribs and are disposed at intervals to form the elastic member.

In the foregoing design, when the hollowed-out hole is disposed to enable the elastic member to be subjected to the extrusion force along the axial direction, the elastic member is deformed along the axial direction. An extending direction of the connecting rib may be any direction. The connecting rib may cause the elastic member to be deformed along the axial direction, and cause the elastic member to be deformed in another direction.

In a possible design, a shape of the hollowed-out hole includes at least one of a polygon and an arc shape.

In the foregoing design, when the hollowed-out shape is a regular shape, it is more conducive to designing and processing the elastic member based on the extrusion force that needs to act on the elastic member, and a force acting on the elastic member along the axial direction of the central shaft is uniform.

In a possible design, the polygon includes at least one of a square, a rectangle, a diamond, a pentagon, or a hexagon; and the arc shape includes at least one of a spiral shape, a circular shape, an oval shape, or a semicircular shape.

In the foregoing design, the hollowed-out shape is related to a clamping force that needs to act on a rotating shaft.

In a possible design, a material of the elastic member is selected from one of a metal, a metal alloy, and a plastic.

In the foregoing design, an elastic member of a metal or a metal alloy material has stronger toughness and can be used more frequently. The elastic member of the plastic material may be used to form the elastic member through injection molding, and processing costs are low.

The central shaft includes a fastening part, a blocking part, and a rod part that are fixedly connected, and the blocking part is located between the rod part and the fastening part; and the second bracket is fastened to the fastening part, the rod part sequentially passes through the first bracket, the concave cam assembly, and the elastic member, and the first bracket is held against the blocking part.

In the foregoing design, the fastening part is configured to fasten the second body. The blocking part is configured to cooperate with a fastener, so that a distance between the blocking part and the fastener remains unchanged. When a total width of the concave cam assembly changes, the elastic member is extruded, so that the elastic member is deformed. The rod part is configured to connect the elastic member and the concave cam assembly into a whole.

In a possible design, the first bracket includes a first fastening plate, a first through hole is disposed on the first fastening plate, the rod part passes through the first through hole, and the first fastening plate is held against the blocking part.

In the foregoing design, the blocking part limits the first fastening plate, so that the first bracket is relatively fastened to the central shaft.

In a possible design, the concave cam assembly includes a concave wheel and a cam wheel that are adjacent to each other, where one of the concave wheel and the cam wheel is fixedly connected to the first bracket, and the other of the concave wheel and the cam wheel is fixedly connected to the central shaft.

In the foregoing design, because the first bracket is rotatably connected to the central shaft, the concave wheel is movably connected to the cam wheel, so that a total width of the concave cam assembly along the axial direction can be changed, and then the elastic member is deformed.

In a possible design, a fastening hole is disposed on the first fastening plate, the concave wheel includes a concave wheel part and a clamping part that are connected to each other, the concave wheel part is sleeved onto the rod part, and the clamping part is clamped in the fastening hole.

In the foregoing design, the clamping part cooperates with the fastening hole, so that the concave wheel is fixedly connected to the first fastening plate.

In a possible design, a second through hole is disposed in the concave wheel part, and a minimum diameter of the second through hole is greater than a maximum diameter of the rod part.

In the foregoing design, the rod part and the concave wheel can rotate relative to each other.

In a possible design, a third through hole is disposed in the cam wheel, the third through hole is in a flat shape, the rod part is in a flat shape, and the cam wheel is sleeved onto the rod part.

In the foregoing design, when the central shaft rotates, the cam wheel rotates synchronously with the central shaft, and the rod part in a flat shape and a third through hole in a flat shape are disposed. With simple structural design, the cam wheel may be fixedly connected to the central shaft, and assembly of the rotating shaft is further facilitated.

In a possible design, a surface that is of the concave wheel part and that connects to the cam wheel includes a recessed part and a flat grinding area that are connected, a surface that is of the cam wheel and that connects to the concave wheel includes a protruding part, and the protruding part may be accommodated in the recessed part.

In the foregoing design, the recessed part and the flat grinding area of the concave wheel part match with the protruding part of the cam wheel. When the cam wheel and the concave wheel rotate relative to each other, a change of a total width of the concave cam assembly along the axial direction can be implemented, so that the elastic member is deformed.

In a possible design, the cam wheel and the concave wheel rotate relative to each other, and before the protruding part comes into contact with the flat grinding area, the elastic member reaches a critical point at which the extrusion force is a constant force.

In the foregoing design, even if a surface located in the flat grinding area is not flat, when the protruding part comes into contact with the flat grinding area and rotate relative to each other, and the extrusion force acting on the elastic member is a constant force, the cam wheel and the concave wheel are extruded by a reaction force of a same magnitude, so that the concave wheel and the cam wheel are relatively stable, and then the first body and the second body maintain an opening/closing angle needed by the user.

In a possible design, the rotating shaft further includes a fastener, and the fastener is fastened to a side of the rod part facing away from the blocking part and is held against a surface of the elastic member facing away from the concave cam assembly.

In the foregoing design, the fastener is configured to cooperate with the blocking part, so that a distance between the fastener and the blocking part remains unchanged. When a total width of the concave cam assembly changes, the elastic member is extruded, so that the elastic member is deformed.

In a possible design, the rotating shaft further includes a friction sheet, the friction sheet includes a fourth through hole, the fourth through hole is in a flat shape, and a shape of the fourth through hole matches with a shape of the rod part; and the friction sheet is located between the fastener and the blocking part.

In the foregoing design, a distance between the fastener and the concave cam assembly may be reduced, a width of the elastic member along the axial direction is further reduced, and a reaction force acting on the concave cam assembly by the elastic member is increased; and a friction force of each element in a direction perpendicular to the axial direction is also increased, thereby improving stability when the first body and the second body are opened or closed.

In a possible design, the friction sheet is located between the concave wheel and the first fastening plate.

In the foregoing design, surfaces that are of the friction sheet and that connect to the concave wheel to the first fastening plate have specific roughness. Because the concave wheel is fixedly connected to the first fastening plate, the friction sheet is fixedly connected to the central shaft. The friction sheet is disposed to increase a friction force, and may increase recovery resistance of the first body or the second body along a gravity direction, thereby improving stability when the first body and the second body are opened or closed. The disposition of the friction sheet may also reduce a distance between the fastener and the concave cam assembly, further reduce a width of the elastic member along the axial direction, and increase a reaction force acting on the concave cam assembly by the elastic member; and further increase a friction force of each element on a surface perpendicular to the axial direction, thereby improving stability when the first body and the second body are opened or closed.

According to a second aspect, this application provides a terminal device. The terminal device includes a first body, a second body, and a rotating shaft. The first body is fixedly connected to a first bracket, and the second body is fixedly connected to a second bracket.

### BRIEF DESCRIPTION OF DRAWINGS

FIG. 1 is a schematic diagram of an overall structure of a terminal device;
FIG. 2 is a schematic diagram of an overall structure of a rotating shaft including a disc spring group;
FIG. 3 is an exploded view of the rotating shaft shown in FIG. 2;
FIG. 4 is a schematic diagram of a structure of assembling a plurality of disc springs into the disc spring group shown in FIG. 2;
FIG. 5 is a schematic diagram of an overall structure of a rotating shaft including an elastic member according to some embodiments of this application;
FIG. 6 is an exploded view of the rotating shaft shown in FIG. 5;
FIG. 7 is an exploded view of the concave cam assembly shown in FIG. 6;
FIG. 8 is an exploded view the concave cam assembly shown in FIG. 6 in another direction;
FIG. 9 is a schematic diagram of an overall structure when a concave wheel and a cam wheel in a rotating shaft do not rotate relative to each other;
FIG. 10 is a schematic diagram of an overall structure after a concave wheel and a cam wheel in a rotating shaft rotate relative to each other;
FIG. 11 is a schematic diagram of an overall structure in which a hollowed-out shape of a rotating shaft is a hexagon;
FIG. 12 is a schematic diagram of a plane in which a hollowed-out shape of a rotating shaft is a quadrilateral;
FIG. 13 is a schematic diagram of an overall structure in which a hollowed-out shape of a rotating shaft is a spiral shape;
FIG. 14 is a schematic diagram of a plane in which a hollowed-out shape of a rotating shaft is a circular shape;
FIG. 15 is a schematic diagram of a structure of before generating deformation (solid line) and after generating deformation (dashed line) when a hollowed-out shape of a rotating shaft is a hexagon; and
FIG. 16 is a schematic diagram showing a relationship between an extrusion force acting on a rotating shaft and a deformation quantity in axial direction.

**Description of symbols of main components**

| | |
|---|---|
| Terminal device | 200 |
| First body | 210 |
| Second body | 220 |
| Rotating shaft | 100, 100a |
| Central shaft | 10, 10a |
| Fastening part | 11 |
| First penetrating hole | 112 |
| Blocking part | 13 |
| Rod part | 15 |
| First bracket | 20, 20a |
| First fastening plate | 21 |
| First through hole | 212 |
| Fastening hole | 214 |
| Second fastening plate | 23 |
| Second penetrating hole | 232 |
| Second bracket | 30, 30a |
| Disc spring group | 40a |
| Disc spring | 41a |
| Concave cam assembly | 50, 50a |
| Concave wheel | 51 |
| Concave wheel part | 512 |
| Second through hole | 5122 |
| Recessed part | 5124 |
| Flat grinding area | 5126 |
| Clamping part | 514 |
| Cam wheel | 53 |
| Third through hole | 532 |
| Protruding part | 534 |
| Elastic member | 60, 60a, 60b, 60c |
| Fifth through hole | 61 |
| Hollowed-out hole | 63, 63a, 63b, 63c |
| Connecting rib | 65, 65a, 65b, 65c |
| Fastener | 70 |
| Friction sheet | 80 |
| Fourth through hole | 81 |
| Distance | D |
| Width | W1, W2 |
| Critical point | t |
| Angle | θ |
| Extrusion force | F |

### DESCRIPTION OF EMBODIMENTS

To better understand the foregoing objectives, features, and advantages of this application, the following describes this application in detail with reference to the accompanying drawings and specific implementations. It should be noted that the implementations of this application and the features in the implementations may be combined with each other provided that no conflict occurs. Many specific details are described in the following description, so as to fully understand this application. The described implementations are only some of the implementations of this application, not all the implementations.

Unless otherwise defined, all technical terms and scientific terms used in this specification have the same meaning as those commonly understood by those skilled in the art of this application. The terms used in the specification of this application are merely intended to describe specific implementations, but not intended to limit this application. The term "and/or" used in the specification includes all and any combinations of one or more associated listed items.

In embodiments of this application, for ease of description but not limitation of this application, the term "connection" used in the specification and claims of this application is not limited to a physical or mechanical connection, whether direct or indirect. "Top", "bottom", "above", "below", "left", "right", and the like are only used to indicate a relative position relationship. When an absolute position of a described object changes, the relative position relationship also correspondingly changes.

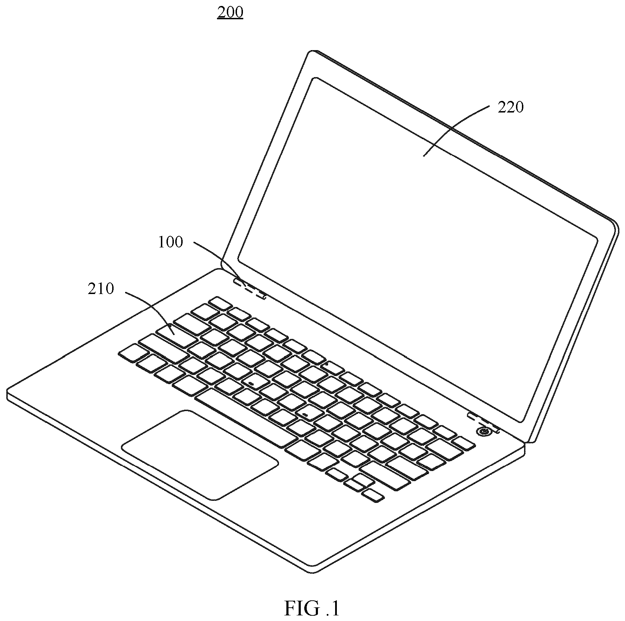

FIG. 1 shows a terminal device 200. The terminal device 200 includes, but is not limited to, a computer, a mobile phone, a door, a Bluetooth headset box, a glasses box, and other products that need to use a rotating shaft 100. In this example, the terminal device 200 is a laptop computer.

The terminal device 200 includes a first body 210, a second body 220, and the rotating shaft 100. The rotating shaft 100 is connected to the first body 210 and the second body 220. The rotating shaft 100 can be used to change an opening/closing angle between the first body 210 and the second body 220, and maintain the opening/closing angle needed by the user.

Specific names of the first body 210 and the second body 220 are related to a use scenario of the rotating shaft 100. For example, when the terminal device 200 is a laptop computer, the first body 210 may be a keyboard, and the second body 220 may be a display; or when the terminal device 200 is a door, the first body 210 may be a door frame, and the second body 220 may be a door plate. The foregoing is merely an example for description, not a limitation.

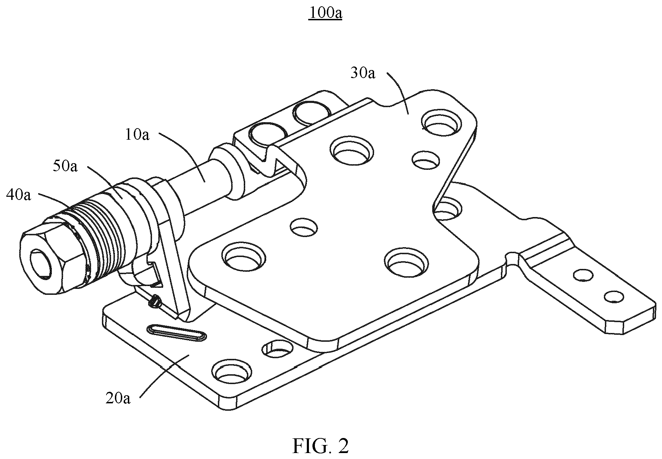

FIG. 2 shows a rotating shaft 100a. The rotating shaft 100a includes a central shaft 10a, a first bracket 20a, a second bracket 30a, a disc spring group 40a, and a concave cam assembly 50a. The first bracket 20a is rotatably disposed on the central shaft 10a, the second bracket 30a is fastened to the central shaft 10a, the disc spring group 40a is disposed on the central shaft 10a, the concave cam assembly 50a is disposed on the central shaft 10a, and the concave cam assembly 50a may enable the disc spring group 40a to be deformed in an extending direction of the central shaft 10a. The first bracket 20a is configured to be fastened to the first body 210, and the second bracket 30a is configured to be fastened to the second body 220. The first bracket 20a is rotatably connected to the second bracket 30a, so that the first body 210 and the second body 220 can be opened or closed.

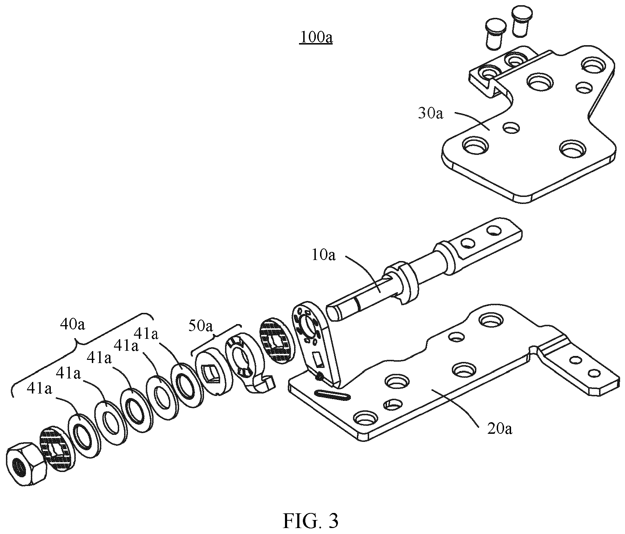

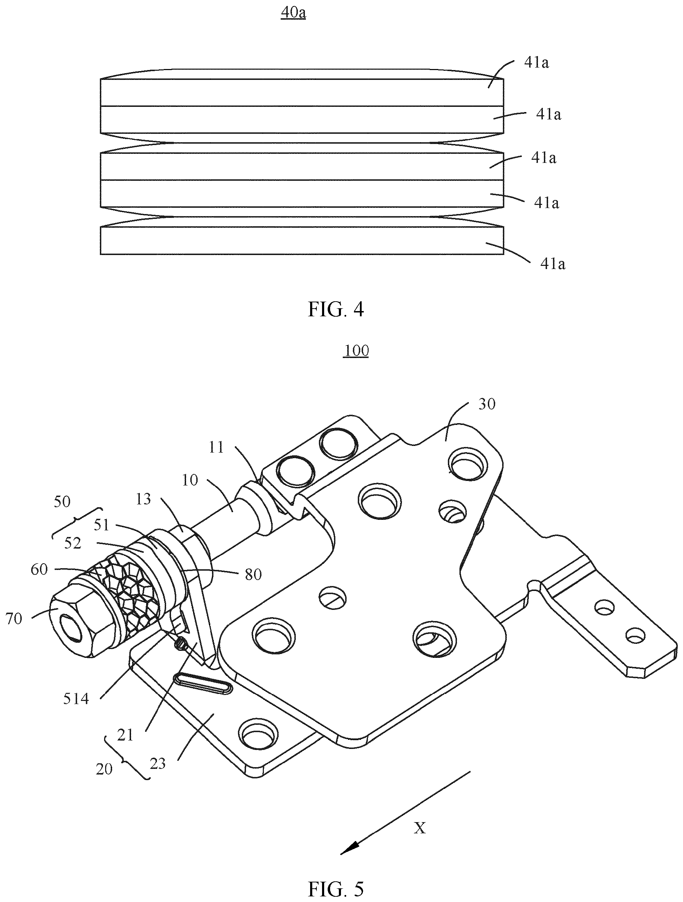

Referring to both FIG. 3 and FIG. 4, the disc spring group 40a is formed by assembling a plurality of disc springs 41a, each disc spring 41a is a circular arched sheet, and a thickness of the disc spring 41a may be 0.4-0.6 mm. In this example, the disc spring group 40a is formed by assembling five disc springs 41a. The disc spring 41a has a front side and a back side in the process of assembling to form the disc spring group 40a. In the process of assembling, the front side and the back side need to be assembled manually and alternately, so as to form the elastic disc spring group 40a.

The inventors of this application have found that manual assembly has low efficiency and is prone to errors. In some use scenarios, for example, a size of the disc spring 41a is relatively small, it is difficult to distinguish the positive side and the negative side of the disc spring 41a, or a quantity of the disc springs 41a that need to be used are relatively large, which increases a probability of manual error. By replacing manual assembly with automated assembly, additional automated assembly device is needed, improving production costs. Second, the terminal device 200 including the rotating shaft 100a is usually used for a plurality of times. Therefore, the rotating shaft 100a can be used more frequently, and a quantity of times that the foregoing disc spring group 40a can be used generally is limited (for example, 20,000 to 30,000 times), a relatively large elastic force attenuation may occur, thereby causing a sharp decrease in a torque of the rotating shaft 100a, and affecting use of the user. In addition, the disc spring group 40a includes a plurality of disc springs 41a. When a specific included angle is formed between the first body 210 and the second body 220, because of gravity of the first body 210 or the second body 220, the first body 210 or the second body 220 has a recovery tendency along the direction of gravity, and the plurality of disc springs 41a have a torsion force fluctuation perpendicular to an axial direction, so that it is difficult to maintain an angle after the first body 210 and the second body 220 are opened. The inventors of this application have also found that the following problem also exists when the spring is used to replace the foregoing disc spring group 40a: When the spring is used to replace the foregoing disc spring group 40a, the elasticity of the spring is difficult to support the first body 210 or the second body 220 after the first body 210 and the second body 220 are opened. In addition, an external force acting on the disc spring group 40a or the spring is positively correlated with a deformation quantity. That is, when a magnitude of the external force changes, the deformation quantity of the disc spring group 40a or the spring changes, and consequently, a force acting on the first body 210 or the second body 220 is unstable.

Referring to FIG. 5, some embodiments of this application provide a rotating shaft 100. The rotating shaft 100 includes a central shaft 10, a first bracket 20, a second bracket 30, an elastic member 60, and a concave cam assembly 50. The first bracket 20 is relatively and rotatably connected to the central shaft 10, the second bracket 30 is fixedly connected to the central shaft 10, the elastic member 60 is disposed on the central shaft 10, the elastic member 60 is in a hollowed-out shape, the concave cam assembly 50 is disposed on the central shaft 10, and the concave cam assembly 50 may enable the elastic member 60 to be deformed. When the first bracket 20 rotates relative to the second bracket 30, the concave cam assembly 50 enables the elastic member 60 in a hollowed-out shape to be deformed, so that a specific included angle is formed between the first bracket 20 and the second bracket 30.

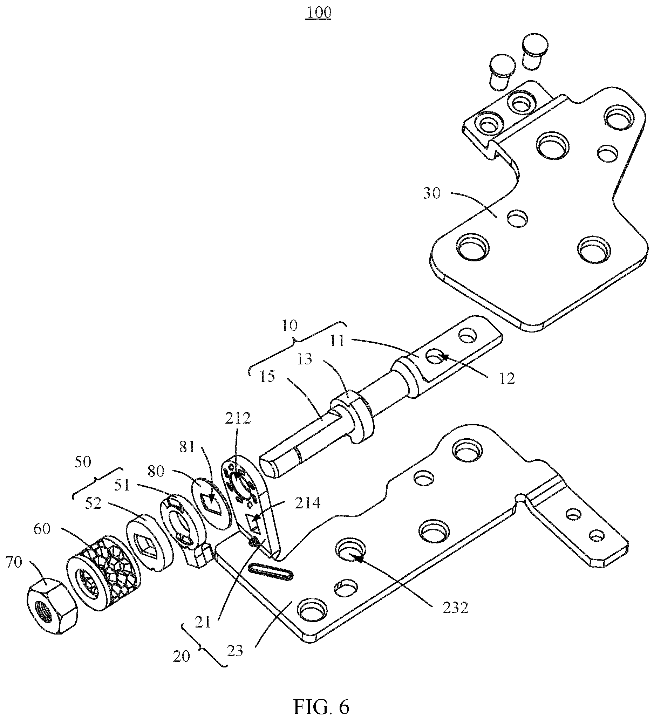

Specifically, referring to FIG. 6, the central shaft 10 includes a fastening part 11, a blocking part 13, and a rod part 15 that are fixedly connected. The blocking part 13 is located between the fastening part 11 and the rod part 15. The rod part 15 extends outward on a side of the blocking part 13 facing away from the fastening part 11. For ease of description, a direction in which the rod part 15 extends is defined as an X-axis direction (that is, an axial direction of the rod part 15). In a direction perpendicular to the X-axis direction, a diameter of the blocking part 13 is greater than a diameter of the rod part 15.

The fastening part 11 is in a flat block shape, and a first penetrating hole 112 is disposed on the fastening part 11. The first penetrating hole 112 may cooperate with a nut, and is configured to fasten the second body 220.

The rod part 15 sequentially passes through the first bracket 20, the concave cam assembly 50, and the elastic member 60. The first bracket 20 is held against the blocking part 13. The concave cam assembly 50 is located between the elastic member 60 and the first bracket 20. The rotating shaft 100 further includes a fastener 70, and the fastener 70 is located at an end of the rod part 15, so that the first bracket 20, the elastic member 60, and the concave cam assembly 50 are fastened to the rod part 15, and then the fastener 70 and the first bracket 20 are fastened at a distance D along the X-axis direction. In this embodiment, the fastener 70 is a nut. In another implementation, a fastening manner is not limited to fastening with a nut, or may be bonding, clamping, or the like.

The first bracket 20 includes a first fastening plate 21 and a second fastening plate 23, and the first fastening plate 21 is fixedly connected to the second fastening plate 23. The second fastening plate 23 is disposed on a surface of the first fastening plate 21 and has a specific included angle with the first fastening plate 21. In this embodiment, the second fastening plate 23 and the first fastening plate 21 are perpendicular to each other. In other embodiments, an angle between the second fastening plate 23 and the first fastening plate 21 is not limited, and may be set according to needs.

A second penetrating hole 232 is disposed on the second fastening plate 23, and the second penetrating hole 232 may cooperate with a nut, and is configured to fasten the first body 210.

A first through hole 212 and a fastening hole 214 are disposed on the first fastening plate 21. The first through hole 212 penetrates two opposite surfaces of the first fastening plate 21, the first through hole 212 is configured to pass through the central shaft 10, and the first fastening plate 21 is held against a surface of the blocking part 13 facing away from the fastening part 11. The fastening hole 214 may be a through hole, or may be an accommodation slot. In this embodiment, the fastening hole 214 is a through hole, and is configured to limit the concave cam assembly 50.

The concave cam assembly 50 is sleeved onto the rod part 15. The concave cam assembly 50 includes a concave wheel 51 and a cam wheel 53 that are adjacent to each other. Surfaces connecting the concave wheel 51 and the cam wheel 53 cooperate with each other, and the concave wheel 51 is movably connected to the cam wheel 53. One of the concave wheel 51 and the cam wheel 53 is fixedly connected to the first bracket 20, and the other of the concave wheel 51 and the cam wheel 53 is fixedly connected to the central shaft 10. When the concave wheel 51 moves relative to the cam wheel 53, a total width of the concave wheel 51 and the cam wheel 53 along the X-axis direction changes, so that a relative extrusion force F acts on the elastic member 60 and enables the elastic member 60 to be deformed.

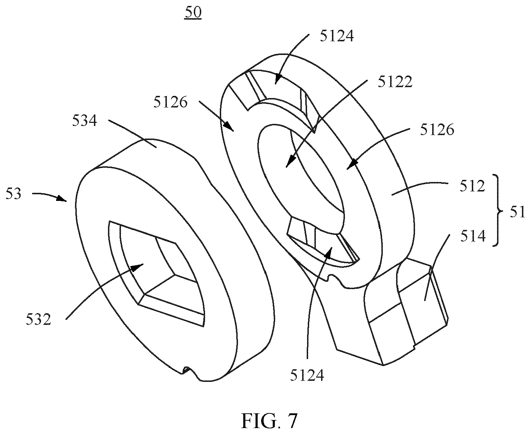

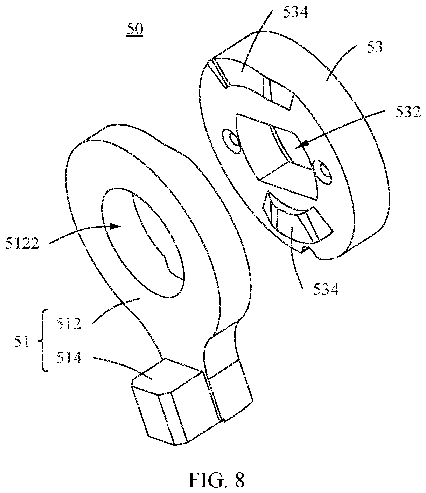

Specifically, referring to both FIG. 7 and FIG. 8, in this embodiment, the concave wheel 51 is fixedly connected to the first fastening plate 21, and the cam wheel 53 is fixedly connected to the rod part 15. The concave wheel 51 includes a concave wheel part 512 and a clamping part 514. The clamping part 514 is connected to an edge area of the concave wheel part 512, and extends toward a direction of the first fastening plate 21, and at least a part of the clamping part 514 is clamped in the fastening hole 214, so that the concave wheel 51 is fixedly connected to the first bracket 20. A second through hole 5122 is disposed in the concave wheel part 512, and a minimum diameter of the second through hole 5122 is greater than a maximum diameter of the rod part 15, so that the rod part 15 and the concave wheel 51 can rotate relative to each other. A third through hole 532 is disposed in the cam wheel 53, the third through hole 532 is in a flat shape, the rod part 15 is in a flat shape, and the third through hole 532 matches with the rod part 15. The cam wheel 53 is relatively fastened to the rod part 15. When the central shaft 10 rotates, the cam wheel 53 rotates synchronously with the central shaft 10, and the rod part 15 in a flat shape and the third through hole 532 in a flat shape are disposed. With simple structural design, the cam wheel 53 may be fixedly connected to the central shaft 10, and assembly of the rotating shaft 100 is further facilitated. In other embodiments, the cam wheel 53 may be fastened the central shaft 10 through bonding, clamping, or the like.

A surface that is of the concave wheel part 512 and that connects to the cam wheel 53 includes a recessed part 5124 and a flat grinding area 5126 that are connected, and a surface that is of the cam wheel 53 and that connects to the concave wheel 51 includes a protruding part 534. When the concave wheel 51 and the cam wheel 53 do not rotate relative to each other, the protruding part 534 corresponds to the recessed part 5124, that is, the protruding part 534 is accommodated in the recessed part 5124. In this embodiment, there are two recessed parts 5124 and two protruding parts 534, and the two recessed parts 5124 and the two protruding parts 534 are separately correspondingly disposed. There are also two flat grinding areas 5126, and the recessed part 5124 and the flat grinding area 5126 are disposed at intervals. The quantity of the recessed part 5124 or the protruding part 534 is related to an angle that needs to be maintained after the first body 210 and the second body 220 are opened. In other embodiments, the quantity of recessed part 5124 and the quantity of the protruding part 534 are not limited.

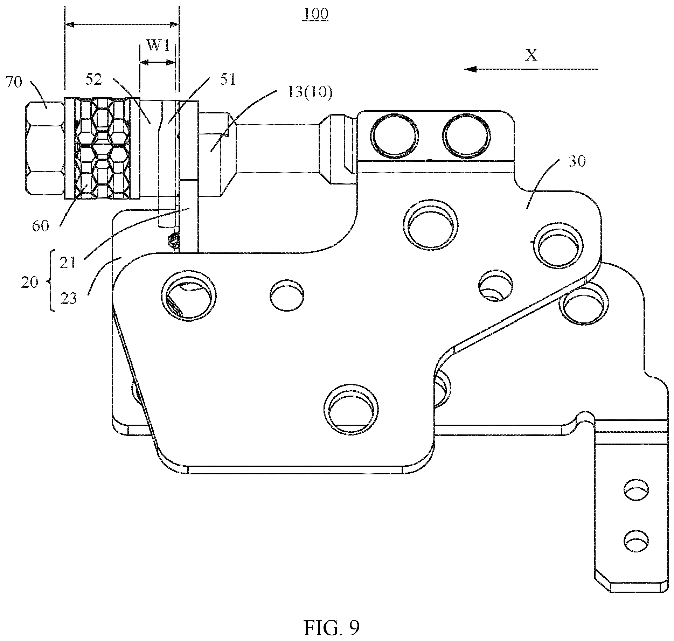

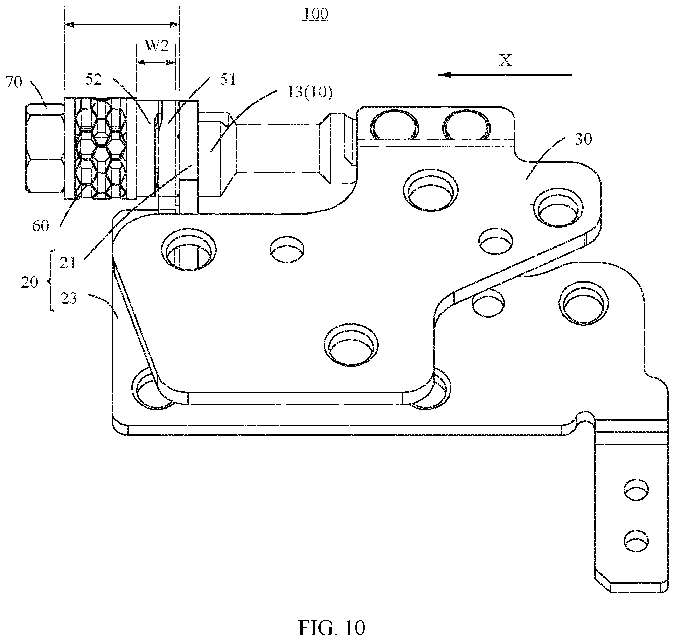

Referring to FIG. 9, when the concave wheel 51 and the cam wheel 53 do not rotate relative to each other, the concave wheel 51 and the cam wheel 53 have a total width W1 along an X-axis direction. The concave wheel 51 is fastened, and the cam wheel 53 is rotated, so that the protruding part 534 and the concave wheel 51 gradually generate relative rotation along a sidewall of the recessed part 5124. As an angle of relative rotation increases, the total width W1 of the cam wheel 53 and the concave wheel 51 along the X-axis direction gradually increases. Because a distance D between the fastener 70 and the first fastening plate 21 is constant, a width of the elastic member 60 gradually decreases, and an extrusion force F acting on the elastic member 60 gradually increases. Referring to FIG. 10, when the protruding part 534 rotates to a connection point between the recessed part 5124 and the flat grinding area 5126, a total width W2 of the cam wheel 53 and the concave wheel 51 reaches a maximum, and an extrusion force F acting on the elastic member 60 reaches a maximum. The relative rotation between the cam wheel 53 and the concave wheel 51 continues to be increased, and the total width W2 of the cam wheel 53 and the concave wheel 51 does not change. In this case, the force acting on the elastic member 60 no longer changes. Theoretically, the flat grinding area 5126 should be a plane. However, an absolute flatness cannot be reached due to a limitation on an actual processing plane. Therefore, in an actual product, when the protruding part 534 and the flat grinding area 5126 come into contact and rotate relative to each other, a small fluctuation may occur because the flat grinding area 5126 is not flat, and consequently, a deformation quantity of the elastic member 60 may also fluctuate.

It may be understood that the concave wheel 51 is fixedly connected to the first bracket 20, the first bracket 20 is fixedly connected to the first body 210, the cam wheel 53 is fixedly connected to the central shaft 10, and the central shaft 10 is fixedly connected to the second body 220. Therefore, the concave wheel 51 and the cam wheel 53 generate relative rotation, to synchronously drive the first body 210 and the second body 220 to generate relative rotation. An angle of relative rotation between the first body 210 and the second body 220 may be set according to needs.

The surfaces on which the recessed part 5124 and the protruding part 534 are formed are arc surfaces. When the concave wheel 51 and the cam wheel 53 generate relative rotation movement, it is conducive to smooth transition of the extrusion force F acting on the elastic member 60, thereby improving user experience.

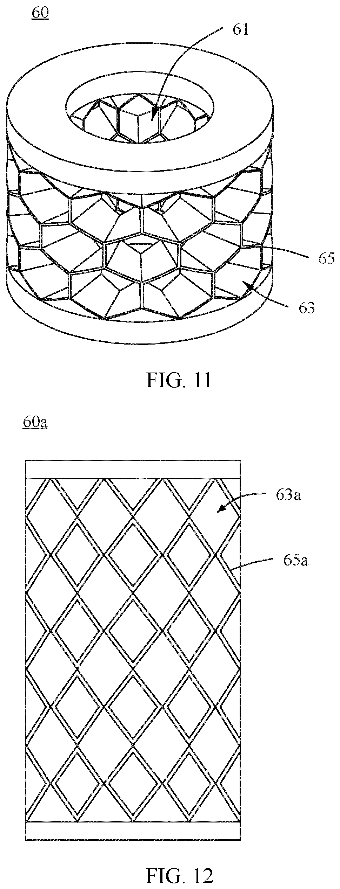

Referring to FIG. 11 to FIG. 14, the elastic member 60 is a hollowed-out cylinder, and the elastic member 60 is of an integrated structure. The center of the elastic member 60 has a fifth through hole 61, and is configured to be sleeved onto the rod part 15. The elastic member 60 that is of an integrated structure may be assembled to the central shaft 10 at one time, and therefore mounting is simple, thereby improving mounting efficiency. The elastic member 60 replaces the disc spring group 40a including the plurality of disc springs 41a, so as to fundamentally avoid problems of low efficiency and high error rate that are caused by assembling the plurality of disc springs 41a, and no additional automated assembly device needs to be disposed.

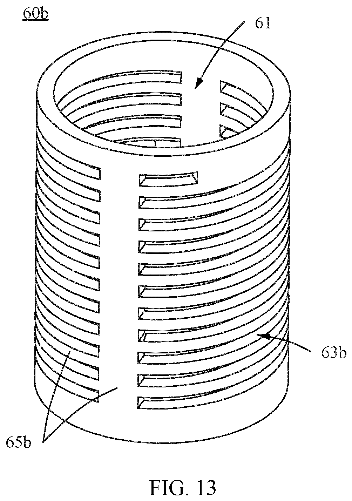

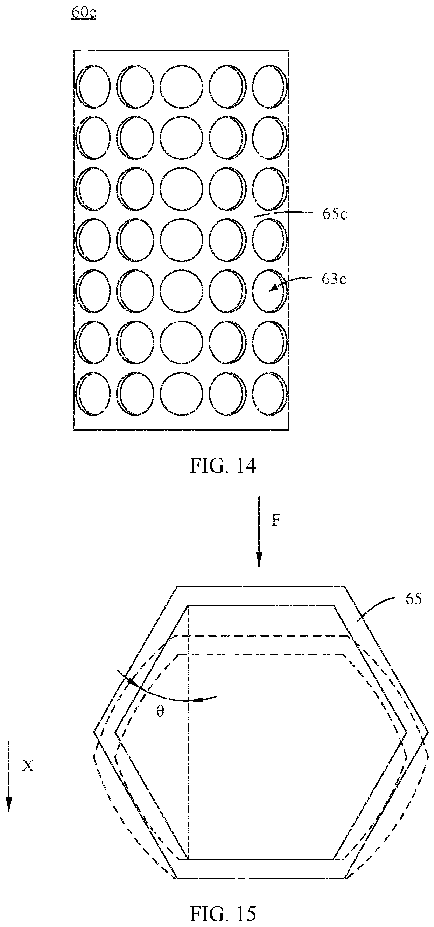

A hollowed shape may be a regular shape or an irregular shape. A regular shape includes, but is not limited to, a polygon (refer to FIG. 11 and FIG. 12), an arc shape (refer to FIG. 13 and FIG. 14), or the like. The polygon includes, but is not limited to, a square, a rectangle, a diamond, a pentagon, a hexagon, or the like; and the arc shape includes, but is not limited to, a spiral shape, a circular shape, an oval shape, or a semicircular shape. In a same embodiment, the foregoing shapes may be combined with each other. When the hollowed-out shape is a regular shape, it is more conducive to designing and processing the elastic member 60 based on the extrusion force F that needs to act on the elastic member 60, and a force acting on the elastic member 60 along the X-axis direction is uniform.

Specifically, referring to FIG. 11, a plurality of hollowed-out holes 63 and a plurality of connecting ribs 65 are disposed on a cylinder wall of the hollowed-out elastic member 60 in this embodiment of this application. The hollowed-out hole 63 is connected to the fifth through hole 61, and a shape of the hollowed-out hole 63 is a hexagon shape. The plurality of hollowed-out holes 63 are interleaved with the plurality of connecting ribs 65, and are disposed at intervals to form the hollowed-out elastic member 60, so that the cylinder wall of the elastic member 60 forms a hollowed-out cylinder wall in a honeycomb-like shape.

Referring to FIG. 12, a plurality of hollowed-out holes 63a and a plurality of connecting ribs 65a are disposed on a cylinder wall of another hollowed-out elastic member 60a in this embodiment of this application. The hollowed-out hole 63a is connected to a fifth through hole (not shown in the figure), and the hollowed-out hole 63a is in a diamond shape. The plurality of hollowed-out holes 63a are interleaved with the plurality of connecting ribs 65a and are disposed at intervals to form the hollowed-out elastic member 60a.

Referring to FIG. 13, a plurality of hollowed-out holes 63b and a plurality of connecting ribs 65b that are located between the hollowed-out holes 63b are disposed on a cylinder wall of another hollowed-out elastic member 60b in this embodiment of this application. The hollowed-out hole 63b is connected to the fifth through hole 61, and the hollowed-out hole 63b is in a spiral shape. The plurality of hollowed-out holes 63b are interleaved with the plurality of connecting ribs 65b and are disposed at intervals to form the hollowed-out elastic member 60b. An extending direction of the connecting rib 65b includes extending along an X-axis direction (an axial direction) and extending along an intersection direction with the X-axis direction. The connecting rib 65b extending along an X-axis direction enables the elastic member 60b to be deformed in the intersection direction with the X-axis direction when being subjected to the extrusion force F.

Referring to FIG. 14, a plurality of hollowed-out holes 63c and a plurality of connecting ribs 65c are disposed on a cylinder wall of another hollowed-out elastic member 60c in this embodiment of this application. The hollowed-out hole 63c is connected to a fifth through hole (not shown in the figure), and the hollowed-out hole 63c is in a circular shape. The plurality of hollowed-out holes 63c are interleaved with the plurality of connecting ribs 65c and are disposed at intervals to form the hollowed-out elastic member 60c.

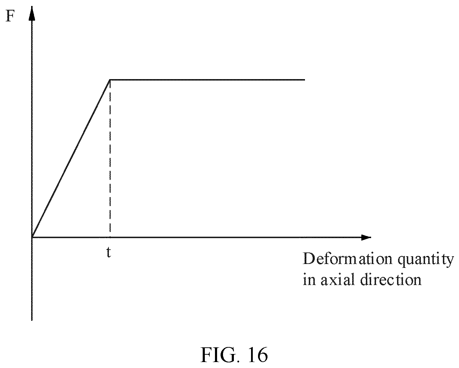

Depending on the position of the connecting rib 65, formed hollowed-out shapes are different, and an extending direction of the connecting rib 65 may be any direction. The connecting rib 65 may cause the elastic member 60 to be deformed along the axial direction, or to be deformed along another direction. When a total width of the concave cam assembly 50 along the X-axis direction changes, the elastic member 60 is subjected to the extrusion force F. Because the elastic member 60 is in a hollowed-out shape, referring to FIG. 15, an example in which the hollowed-out shape is a hexagon is used (solid lines in FIG. 15), and the connecting rib 65 disposed around the hexagon is perpendicular to the extrusion force F; and referring to FIG. 16, when being subjected to the extrusion force F, the elastic member 60 may be compressed along the X-axis direction and may be deformed. As the extrusion force F increases, a deformation quantity of the elastic member 60 increases. When the extrusion force F acting on the elastic member 60 reaches a critical point t (point t in FIG. 16), the elastic member 60 may bulge outward along a direction intersecting the X-axis to be deformed (dashed lines in FIG. 15), and the connecting rib 65 of the elastic member 60 may be deformed along a plurality of directions (which is not limited to deformation along the X-axis direction only). That is, the concave cam assembly 50 continues to extrude the elastic member 60 to exceed the critical point t, and the deformation quantity of the elastic member 60 includes deformation along the X-axis direction and deformation along the direction intersecting the X-axis direction. According to the principle of buckling analysis, the extrusion force F acting on the elastic member 60 remains unchanged, and in this case, a torsion force of the rotating shaft 100 is stable.

In some implementations, the critical point t (that is, the extrusion force F acting on the elastic member 60 becomes a constant force) is reached, before the protruding part 534 rotates to a connection point between the recessed part 5124 and the flat grinding area 5126. In this way, even if a surface of the flat grinding area 5126 is not flat, when the protruding part 534 and the flat grinding area 5126 come into contact and rotate relative to each other, and the extrusion force F acting on the elastic member 60 is a constant force, the cam wheel 53 and the concave wheel 51 are extruded by a reaction force of a same magnitude, so that the concave wheel 51 and the cam wheel 53 are relatively stable, and then the first body 210 and the second body 220 maintain an opening/closing angle needed by the user. A critical point t of the elastic member 60 is in a specific relationship with a hollowed-out shape, a material, a thickness, an angle θ between the connecting rib 65 of the elastic member 60 and the extrusion force F (refer to FIG. 15), and the like. A material, a wall thickness, a hollowed-out shape, and the like that are selected by the elastic member 60 may be comprehensively calculated based on the extrusion force F needed by the elastic member 60, so that the elastic member 60 can produce a proper extrusion force F, or a material, a wall thickness, a hollowed-out shape, and the like of the elastic member 60 may be designed based on whether the elastic member 60 needs to reach a constant force interval. When the rotating shaft 100 is applied to a specific terminal device 200, a function of the rotating shaft 100 is implemented. In addition, the elastic member 60 is always in an elastic deformation area of the elastic member 60 in a process of being deformed by the extrusion force F, and no plastic deformation occurs. Therefore, plastic deformation and elastic attenuation of the disc spring 41a in the related technology do not occur.

A range of the constant force interval (which is a width when the extrusion force F along an axial direction deformation quantity in FIG. 16 is a constant force) also has a specific relationship with the angle θ between the connecting rib 65 and the extrusion force F. In some implementations, when conditions such as a wall thickness and a material of the elastic member 60 are the same, and a range of an angle θ is 50°-70°, a range of the constant force interval is the largest; or when an angle θ is less than 50°, a range of the constant force interval increases as an angle θ increases; or when an angle θ is greater than 70°, a range of the constant force interval decreases as an angle θ increases. An angle θ between the connecting rib 65 and the extrusion force F may be selected according to an actual application requirement of the rotating shaft, that is, a hollowed-out shape and an arrangement direction of the hollowed-out shape are selected according to needs.

A material of the elastic member 60 may be metal, metal alloy, or plastic. The elastic member 60 made of metal or metal alloy has stronger toughness and can be used more frequently. The elastic member 60 of the plastic material may be used to form the elastic member 60 through injection molding, and processing costs are low. In some implementations, the elastic member 60 can be used more than 100,000 times.

The rotating shaft 100 further includes a friction sheet 80, and roughness of a surface of the friction sheet 80 is relatively large. The friction sheet 80 includes a fourth through hole 81. The fourth through hole 81 is in a flat shape, and a shape of the fourth through hole 81 matches with a shape of the rod part 15. The friction sheet 80 is fixedly connected to the rod part 15. The friction sheet 80 is located between the concave wheel 51 and the first fastening plate 21. Surfaces that are of the friction sheet 80 and that connect to the concave wheel 51 and the first fastening plate 21 have specific roughness. Because the concave wheel 51 is fixedly connected to the first fastening plate 21, the friction sheet 80 is fixedly connected to the central shaft 10. The friction sheet 80 is disposed to increase a friction force between the friction sheet 80 and adjacent elements (namely, the concave wheel 51 and the first fastening plate 21). When an included angle is formed between the first body 210 and the second body 220, because of existence of gravity of the first body 210 or the second body 220, the first body 210 or the second body 220 has a recovery tendency along the direction of gravity, a friction force may be increased, and the recovery resistance of the first body 210 or the second body 220 along the direction of gravity can be increased, thereby improving stability when the first body 210 and the second body 220 are opened or closed. Further, the friction sheet 80 is disposed to reduce a distance between the fastener 70 and the concave cam assembly 50, further reduce a width of the elastic member 60 along the X-axis direction, increase a reaction force acting on the concave cam assembly 50 by the elastic member 60, and further increase a friction force of each element on a surface perpendicular to the X-axis direction, thereby further improving stability when the first body 210 and the second body 220 are opened or closed.

Surfaces that are of the concave wheel 51 and the first fastening plate 21 and that connect to the friction sheet 80 may also be provided with a groove or a protrusion that matches with the surface roughness of the friction sheet 80, so that a proper friction force is produced when the rotating shaft 100 is rotating and when the first body 210 or the second body 220 maintains a specific included angle.

The friction sheet 80 may alternatively be located between the cam wheel 53 and the fastener 70, for example, located between the fastener 70 and the elastic member 60 or located between the elastic member 60 and the concave cam assembly 50. The friction sheet 80 is disposed to reduce a distance between the fastener 70 and the concave cam assembly 50, further reduce a width of the elastic member 60 along the X-axis direction, increase a reaction force acting on the concave cam assembly 50 by the elastic member 60, and further increase a friction force of each element on a surface perpendicular to the X-axis direction, thereby improving stability when the first body 210 and the second body 220 are opened or closed.

The rotating shaft 100 provided in this application uses the elastic member 60 that is of the integrated structure and that is in the hollowed-out shape, and may be assembled to the central shaft 10 at one time, and therefore mounting is simple, thereby improving mounting efficiency. The elastic member 60 replaces the disc spring group 40a including the plurality of disc springs 41a, so as to fundamentally avoid problems of low efficiency and high error rate that are caused by assembling the plurality of disc springs 41a, and no additional automated assembly device needs to be disposed. In addition, the elastic member 60 of the integrated structure may avoid a torsion force fluctuation in a direction perpendicular to an axial direction when a plurality of disc springs 41a or springs are used in a related technology. A structure of the elastic member 60 in this application is more conducive to ensuring stability after the first body 210 and the second body 220 are opened. In addition, the elastic member 60 is always in an elastic deformation area of the elastic member 60 in a process of being deformed by the extrusion force F, and no plastic deformation occurs. Therefore, plastic deformation and elastic attenuation of the disc spring 41a in the related technology do not occur, and a use frequency is improved. In addition, based on the structure of the elastic member 60 in this application, when the extrusion force F acting on the elastic member 60 exceeds a critical point t, the elastic member 60 features a constant force.

The foregoing implementations are only used to describe the technical solutions of this application, but not intended to constitute any limitation. Although this application is described in detail with reference to the foregoing example implementations, a person of ordinary skill in the art should understand that modifications or equivalent replacements can be made to the technical solutions of this application without departing from the scope of the technical solutions of this application as defined by the appended claims.

## Claims

1. A rotating shaft, comprising:
a central shaft (10, 10a);
a first bracket (20, 20a), rotatably mounted on the central shaft;
a second bracket (30, 30a), fixedly connected to the central shaft;
an elastic member (60, 60a, 60b, 60c), disposed on the central shaft; and
a concave cam assembly (50, 50a), disposed on the central shaft, wherein the concave cam assembly is configured to enable the elastic member to be deformed; and wherein
when the first bracket rotates relative to the second bracket, the concave cam assembly generates an extrusion force acting on the elastic member, so that the elastic member in a hollowed-out shape is deformed, and then a specific included angle is formed between the first bracket and the second bracket;
wherein the central shaft comprises a fastening part (11), a blocking part (13), and a rod part (15) that are fixedly connected, and the blocking part is located between the rod part and the fastening part; and the second bracket is fastened to the fastening part, the rod part sequentially passes through the first bracket, the concave cam assembly, and the elastic member, and the first bracket is held against the blocking part, wherein the rotating shaft further comprises a fastener (70), and the fastener is fastened to a side of the rod part facing away from the blocking part, and is held against a surface of the elastic member facing away from the concave cam assembly;
**characterised in that** the elastic member is a hollow cylinder of an integrated structure, and a plurality of hollowed-out holes (63, 63a, 63b, 63c) and a plurality of connecting ribs (65, 65a, 65b, 65c) are disposed on a cylinder wall of the elastic member, and the plurality of hollowed-out holes are interleaved with the plurality of connecting ribs and are disposed at intervals to form the elastic member.

2. The rotating shaft according to claim 1, wherein a shape of the hollowed-out hole comprises at least one of a polygon and an arc shape.

3. The rotating shaft according to claim 2, wherein the polygon comprises at least one of a square, a rectangle, a diamond, a pentagon, or a hexagon; and the arc shape comprises at least one of a spiral shape, a circular shape, an oval shape, or a semicircular shape.

4. The rotating shaft according to claim 1, wherein a material of the elastic member is selected from one of metal, metal alloy, and plastic.

5. The rotating shaft according to any preceding claim, wherein the first bracket comprises a first fastening plate (21), a first through hole is disposed on the first fastening plate, the rod part passes through the first through hole, and the first fastening plate is held against the blocking part.

6. The rotating shaft according to claim 5, wherein the concave cam assembly comprises a concave wheel (51) and a cam wheel (53) that are adjacent to each other, wherein one of the concave wheel and the cam wheel is fixedly connected to the first bracket, and the other of the concave wheel and the cam wheel is fixedly connected to the central shaft.

7. The rotating shaft according to claim 6, wherein a fastening hole is disposed on the first fastening plate, the concave wheel comprises a concave wheel part (512) and a clamping part (514) that are connected to each other, the concave wheel part is sleeved onto the rod part, and the clamping part is clamped in the fastening hole;
wherein a second through hole is disposed in the concave wheel part, and a minimum diameter of the second through hole is greater than a maximum diameter of the rod part.

8. The rotating shaft according to claim 7, wherein a third through hole is disposed in the cam wheel, the third through hole is in a flat shape, the rod part is in a flat shape, and the cam wheel is sleeved onto the rod part, such that when the central shaft rotates, the cam wheel rotates synchronously with the central shaft.

9. The rotating shaft according to claim 7, wherein a surface that is of the concave wheel part and that connects to the cam wheel comprises a recessed part (5124) and a flat grinding area (5126) that are connected, a surface that is of the cam wheel and that connects to the concave wheel comprises a protruding part (534), and the protruding part may be accommodated in the recessed part.

10. The rotating shaft according to claim 9, wherein the cam wheel and the concave wheel rotate relative to each other, and before the protruding part comes into contact with the flat grinding area, the elastic member reaches a critical point at which the extrusion force is a constant force.

11. The rotating shaft according to claim 1, wherein the rotating shaft further comprises a friction sheet (80), the friction sheet comprises a fourth through hole, the fourth through hole is in a flat shape, and a shape of the fourth through hole matches with a shape of the rod part; and the friction sheet is located between the fastener and the blocking part.

## Patentansprüche

1. Eine rotierende Welle, umfassend:
eine zentrale Welle (10, 10a);
eine erste Halterung (20, 20a), drehbar an der zentralen Welle montiert;
eine zweite Halterung (30, 30a), fest mit der zentralen Welle verbunden;
ein elastisches Element (60, 60a, 60b, 60c), auf der zentralen Welle angeordnet; und
eine konkave Nockenbaugruppe (50, 50a), auf der zentralen Welle angeordnet, wobei die konkave Nockenbaugruppe so konfiguriert ist, dass das elastische Element verformt werden kann; und wobei
wenn sich die erste Halterung relativ zur zweiten Halterung dreht, erzeugt die konkave Nockenbaugruppe eine Extrusionskraft, die auf das elastische Element wirkt, sodass das elastische Element in einer ausgehöhlten Form verformt wird und dann ein spezifischer eingeschlossener Winkel zwischen der ersten Halterung und der zweiten Halterung gebildet wird;
wobei die zentrale Welle einen Befestigungsteil (11), einen Blockierteil (13) und einen Stangenteil (15) umfasst, die fest miteinander verbunden sind, und das Blockierteil zwischen dem Stangenteil und dem Befestigungsteil angeordnet ist; und die zweite Halterung am Befestigungsteil befestigt ist, der Stangenteil nacheinander durch die erste Halterung, die konkave Nockenbaugruppe und das elastische Element führt, und die erste Halterung gegen das Blockierteil gehalten wird, wobei die rotierende Welle ferner ein Befestigungselement (70) umfasst, und das Befestigungselement an einer Seite des Stangenteils befestigt ist, die vom Blockierteil wegzeigt, und gegen eine Oberfläche des elastischen Elements gehalten wird, die von der konkaven Nockenbaugruppe wegzeigt;
**dadurch gekennzeichnet, dass** das elastische Element ein hohler Zylinder mit einer integrierten Struktur ist und eine Vielzahl von ausgehöhlten Löchern (63, 63a, 63b, 63c) und eine Vielzahl von Verbindungsrippen (65, 65a, 65b, 65c) an einer Zylinderwand des elastischen Elements angeordnet sind, wobei die Vielzahl von ausgehöhlten Löchern mit der Vielzahl von Verbindungsrippen verschachtelt und in Abständen angeordnet sind, um das elastische Element zu bilden.

2. Die rotierende Welle nach Anspruch 1, wobei eine Form des ausgehöhlten Lochs mindestens eine von einem Polygon und einer Bogenform umfasst.

3. Die rotierende Welle nach Anspruch 2, wobei das Polygon mindestens eines von einem Quadrat, einem Rechteck, einem Diamanten, einem Fünfeck oder einem Sechseck umfasst; und die Bogenform mindestens eine von einer Spiralform, einer Kreisform, einer Ovalform oder einer Halbkreisform umfasst.

4. Die rotierende Welle nach Anspruch 1, wobei ein Material des elastischen Elements aus einem von Metall, Metalllegierung und Kunststoff ausgewählt ist.

5. Die rotierende Welle gemäß einem der vorhergehenden Ansprüche, wobei die erste Halterung eine erste Befestigungsplatte (21) umfasst, auf der eine erste Durchgangsöffnung angeordnet ist, der Stabteil durch die erste Durchgangsöffnung hindurchgeht und die erste Befestigungsplatte gegen den Blockierteil gehalten wird.

6. Die rotierende Welle gemäß Anspruch 5, wobei die konkave Nockenbaugruppe ein konkaves Rad (51) und ein Nockenrad (53) umfasst, die nebeneinander angeordnet sind, wobei eines der konkaven Räder und des Nockenrads fest mit der ersten Halterung verbunden ist und das andere fest mit der Zentralwelle verbunden ist.

7. Die rotierende Welle gemäß Anspruch 6, wobei ein Befestigungsloch auf der ersten Befestigungsplatte angeordnet ist, das konkave Rad einen konkaven Radteil (512) und einen Klemmteil (514) umfasst, die miteinander verbunden sind, der konkave Radteil auf den Stabteil aufgesteckt ist und der Klemmteil im Befestigungsloch eingeklemmt ist;
wobei eine zweite Durchgangsöffnung im konkaven Radteil angeordnet ist und ein Mindestdurchmesser der zweiten Durchgangsöffnung größer ist als ein Maximaldurchmesser des Stabteils.

8. Die rotierende Welle gemäß Anspruch 7, wobei eine dritte Durchgangsöffnung im Nockenrad angeordnet ist, die dritte Durchgangsöffnung eine flache Form hat, der Stabteil eine flache Form hat und das Nockenrad auf den Stabteil aufgesteckt ist, sodass das Nockenrad synchron mit der Zentralwelle rotiert, wenn sich die Zentralwelle dreht.

9. Die rotierende Welle gemäß Anspruch 7, wobei eine Oberfläche des konkaven Radteils, die mit dem Nockenrad verbunden ist, einen vertieften Teil (5124) und einen flachen Schleifbereich (5126) umfasst, die miteinander verbunden sind, eine Oberfläche des Nockenrads, die mit dem konkaven Rad verbunden ist, einen hervorstehenden Teil (534) umfasst, und der hervorstehende Teil im vertieften Teil untergebracht werden kann.

10. Die rotierende Welle gemäß Anspruch 9, wobei das Nockenrad und das konkave Rad relativ zueinander rotieren und bevor der hervorstehende Teil mit dem flachen Schleifbereich in Kontakt kommt, erreicht das elastische Element einen kritischen Punkt, an dem die Extrusionskraft eine konstante Kraft ist.

11. Die rotierende Welle gemäß Anspruch 1, wobei die rotierende Welle ferner ein Reibungsblatt (80) umfasst, das Reibungsblatt eine vierte Durchgangsöffnung umfasst, die vierte Durchgangsöffnung eine flache Form hat und eine Form der vierten Durchgangsöffnung mit einer Form des Stabteils übereinstimmt; und das Reibungsblatt zwischen dem Befestiger und dem Blockierteil angeordnet ist.

## Revendications

1. Un arbre rotatif, comprenant :
un arbre central (10, 10a) ;
un premier support (20, 20a), monté rotatif sur l'arbre central ;
un second support (30, 30a), fixé de manière solidaire à l'arbre central ;
un élément élastique (60, 60a, 60b, 60c), disposé sur l'arbre central ; et
un ensemble à came concave (50, 50a), disposé sur l'arbre central, où l'ensemble à came concave est configuré pour permettre la déformation de l'élément élastique ; et où
lorsque le premier support tourne par rapport au second support, l'ensemble à came concave génère une force d'extrusion agissant sur l'élément élastique, de sorte que l'élément élastique en forme évidée est déformé, et qu'un angle spécifique est alors formé entre le premier support et le second support ;
où l'arbre central comprend une partie de fixation (11), une partie de blocage (13) et une partie de tige (15) qui sont fixées de manière solidaire, et la partie de blocage est située entre la partie de tige et la partie de fixation ; et le second support est fixé à la partie de fixation, la partie de tige passe successivement à travers le premier support, l'ensemble à came concave et l'élément élastique, et le premier support est maintenu contre la partie de blocage, où l'arbre rotatif comprend en outre un élément de fixation (70), et l'élément de fixation est fixé à un côté de la partie de tige faisant face à l'opposé de la partie de blocage, et est maintenu contre une surface de l'élément élastique faisant face à l'opposé de l'ensemble à came concave ;
**caractérisé en ce que** l'élément élastique est un cylindre creux d'une structure intégrée, et une pluralité de trous évidés (63, 63a, 63b, 63c) et une pluralité de nervures de connexion (65, 65a, 65b, 65c) sont disposés sur une paroi cylindrique de l'élément élastique, et la pluralité de trous évidés sont entrelacés avec la pluralité de nervures de connexion et sont disposés à intervalles pour former l'élément élastique.

2. L'arbre rotatif selon la revendication 1, où une forme du trou évidé comprend au moins un polygone et une forme d'arc.

3. L'arbre rotatif selon la revendication 2, où le polygone comprend au moins un carré, un rectangle, un losange, un pentagone ou un hexagone ; et la forme d'arc comprend au moins une forme en spirale, une forme circulaire, une forme ovale ou une forme semi-circulaire.

4. L'arbre rotatif selon la revendication 1, où un matériau de l'élément élastique est sélectionné parmi un métal, un alliage métallique et un plastique.

5. L'arbre rotatif selon l'une quelconque des revendications précédentes, dans lequel le premier support comprend une première plaque de fixation (21), une première ouverture traversante est disposée sur la première plaque de fixation, la partie tige traverse la première ouverture traversante, et la première plaque de fixation est maintenue contre la partie de blocage.

6. L'arbre rotatif selon la revendication 5, dans lequel l'ensemble came concave comprend une roue concave (51) et une roue à came (53) qui sont adjacentes l'une à l'autre, dans lequel l'une des roues concave et à came est fixée au premier support, et l'autre des roues concave et à came est fixée à l'arbre central.

7. L'arbre rotatif selon la revendication 6, dans lequel un trou de fixation est disposé sur la première plaque de fixation, la roue concave comprend une partie roue concave (512) et une partie de serrage (514) qui sont connectées l'une à l'autre, la partie roue concave est enfilée sur la partie tige, et la partie de serrage est fixée dans le trou de fixation ;
dans lequel un deuxième trou traversant est disposé dans la partie roue concave, et un diamètre minimum du deuxième trou traversant est supérieur à un diamètre maximum de la partie tige.

8. L'arbre rotatif selon la revendication 7, dans lequel un troisième trou traversant est disposé dans la roue à came, le troisième trou traversant est de forme plate, la partie tige est de forme plate, et la roue à came est enfilée sur la partie tige, de sorte que lorsque l'arbre central tourne, la roue à came tourne synchroniquement avec l'arbre central.

9. L'arbre rotatif selon la revendication 7, dans lequel une surface de la partie roue concave qui se connecte à la roue à came comprend une partie en creux (5124) et une zone de meulage plate (5126) qui sont connectées, une surface de la roue à came qui se connecte à la roue concave comprend une partie saillante (534), et la partie saillante peut être logée dans la partie en creux.

10. L'arbre rotatif selon la revendication 9, dans lequel la roue à came et la roue concave tournent l'une par rapport à l'autre, et avant que la partie saillante n'entre en contact avec la zone de meulage plate, l'élément élastique atteint un point critique où la force d'extrusion est une force constante.

11. L'arbre rotatif selon la revendication 1, dans lequel l'arbre rotatif comprend en outre une feuille de friction (80), la feuille de friction comprend un quatrième trou traversant, le quatrième trou traversant est de forme plate, et une forme du quatrième trou traversant correspond à une forme de la partie tige ; et la feuille de friction est située entre l'attache et la partie de blocage.
